# EUROPÄISCHE PATENTSCHRIFT

(11) **EP 3 328 682 B1**
(45) Veröffentlichungstag und Bekanntmachung des Hinweises auf die Patenterteilung: **15.05.2019**
(21) Anmeldenummer: 16741034.9
(22) Anmeldetag: 20.07.2016
(51) Int. Cl.: B60N 2/02, B60N 2/90, B60N 2/66

(54) **VORRICHTUNG ZUR PNEUMATISCHEN VERSTELLUNG EINES SITZES IN EINEM VERKEHRSMITTEL**
DEVICE FOR PNEUMATICALLY ADJUSTING A SEAT IN A MEANS OF TRANSPORT
DISPOSITIF DE RÉGLAGE PNEUMATIQUE D'UN SIÈGE DANS UN MOYEN DE TRANSPORT

(30) Priorität: 31.07.2015 DE 102015214569
(43) Veröffentlichungstag der Anmeldung: 06.06.2018
(73) Patentinhaber: Conti Temic microelectronic GmbH, 90411 Nürnberg (DE)
(72) Erfinder: KERLER, Alexander, 85135 Titting OT Petersbuch (DE); STEINBERGER, Johann, 86564 Brunnen (DE); THIEL, Wolfgang, 85095 Denkendorf (DE)
(74) Vertreter: Bonn, Roman Klemens
(86) Internationale Anmeldenummer: PCT/EP2016/067315
(87) Internationale Veröffentlichungsnummer: WO 2017/021156

(56) Entgegenhaltungen:
- DE-A1- 10 063 478
- DE-T2- 60 119 970

## Beschreibung

Die Erfindung betrifft eine Vorrichtung zur pneumatischen Verstellung eines Sitzes in einem Verkehrsmittel.

In Verkehrsmitteln, wie z.B. Kraftfahrzeugen oder auch Schienenfahrzeugen bzw. Flugzeugen, kommen in zunehmendem Umfang Vorrichtungen zur pneumatischen Sitzverstellung zum Einsatz. In solchen Vorrichtungen werden befüllbare elastische Kissen bzw. Blasen zur Formung von Sitzkonturen oder zu Massagezwecken verwendet. Diese erlauben eine individuelle Anpassung der Sitze an den Insassen.

Das Befüllen bzw. Entleeren von Kissen in Vorrichtungen zur pneumatischen Sitzverstellung erfolgt über die Betätigung geeigneter Ventile. Dabei kommen unter anderem Piezoventile zum Einsatz, die zwar einen geringen Verstellweg aufweisen, jedoch eine hohe Spannung zu deren Betätigung erfordern und in der Herstellung teuer sind.

Es ist ferner bekannt, Elektromagnetventile in Vorrichtungen zur pneumatischen Sitzverstellung einzusetzen. Diese Ventile sind bei gleichem Bauraum wie Piezoventile deutlich schwerer und bestehen aus einer Vielzahl von Einzelteilen, die aufeinander abgestimmt werden müssen. Ferner ist die Geräuschentwicklung beim Schalten dieser Ventile relativ hoch.

In Vorrichtungen zur pneumatischen Sitzverstellung werden auch Ventile basierend auf Formgedächtnislegierungen verwendet (englisch: SMA = Shape Memory Alloy). Durch Überschreiten eines Temperaturpunkts wird dabei eine Verformung der Metalllegierung bewirkt und hierdurch eine Schaltfunktion in dem Ventil realisiert. In den Dokumenten DE 102 57 549 B3, DE 10 2012 212 686 A1 und WO 2014/135909 A1 sind Beispiele von SMA-Ventilen zur Befüllung von Luftkissen in Fahrzeugsitzen offenbart. SMA-Ventile haben den Nachteil, dass durch notwendige Abkühlzeiten die Aktorgeschwindigkeit verringert wird und ferner ein relativ großer Bauraum benötigt wird, um die notwendigen Bewegungen der Ventile zu erzielen.

In der Druckschrift DE 10 2009 047 834 A1 ist ein Druckentlastungsventil zwischen dem Innenraum und dem Außenraum eines Kraftfahrzeugs unter Verwendung von elektroaktiven Polymeren offenbart. Ferner beschreibt das Dokument DE 601 19 970 T2 allgemein Ventile aus elektroaktiven Polymeren. Das Dokument DE10063478 offenbart eine Vorrichtung zur pneumatischen Verstellung eines Sitzes umfassend mehrere Ventile.

Aufgabe der Erfindung ist es, eine Vorrichtung zur pneumatischen Verstellung eines Sitzes in einem Verkehrsmittel zu schaffen, welche kompakt aufgebaut ist und ein einfaches Befüllen und Entleeren entsprechender Kissen ermöglicht.

Diese Aufgabe wird durch die Vorrichtung gemäß Patentanspruch 1 gelöst. Weiterbildungen der Erfindung sind in den abhängigen Ansprüchen definiert.

Die erfindungsgemäße Vorrichtung zur pneumatischen Verstellung eines Sitzes in einem Verkehrsmittel wird in einer bevorzugten Variante für einen Kraftfahrzeugsitz eingesetzt. Die Vorrichtung kann z.B. eine Lordosenstütze und/oder eine Massageeinrichtung für die Person auf dem entsprechenden Sitz sein. Die Vorrichtung umfasst ein oder mehrere mit Luft befüllbare Kissen bzw. Blasen, welche über ein oder mehrere Ventile mit einer Druckluftzufuhr verbunden sind, sowie eine Steuereinrichtung zum Betätigen des oder der Ventile, um den Füllzustand des oder der Kissen zu ändern.

Die erfindungsgemäße Vorrichtung zeichnet sich dadurch aus, dass ein jeweiliges Ventil zumindest eines Teils der Ventile ein oder mehrere Betätigungselemente aus elektroaktivem Polymer umfasst, an welche eine elektrische Spannung angelegt werden kann, wobei durch Anlegen der elektrischen Spannung ein jeweiliges Betätigungselement verformt wird und hierdurch eine oder mehrere Durchgangsöffnungen, über welche ein Austausch von Druckluft mit zumindest einem Kissen erfolgt, freigegeben oder alternativ gesperrt werden. Umgekehrt werden bei nicht angelegter elektrischer Spannung die Durchgangsöffnung oder die Durchgangsöffnungen gesperrt bzw. alternativ freigegeben, was durch die Rückgängigmachung der Verformung des jeweiligen Betätigungselements bewirkt wird.

Erfindungsgemäß kommen erstmalig Ventile basierend auf elektroaktiven Polymeren in einer Vorrichtung zur pneumatischen Sitzverstellung in einem Verkehrsmittel zum Einsatz. Elektroaktive Polymere sind an sich aus dem Stand der Technik bekannt. In der erfindungsgemäßen Vorrichtung können als Materialien für diese Polymere z.B. die in dem Dokument DE 601 19 970 T2 genannten Polymere verwendet werden. In einer besonders bevorzugten Variante kommt als elektroaktives Polymer ein dielektrisches Elastomer zum Einsatz, welches vorzugsweise als Folie ausgebildet ist. Dieses Elastomer umfasst eine dielektrische elastische Schicht, z.B. aus Silikon oder Acryl, auf deren beiden Seiten jeweils eine elektrisch leitfähige Schicht, z.B. eine Graphitschicht, angeordnet ist. Durch Anlegen einer elektrischen Spannung an diese Schichten wird ein Zusammendrücken des dazwischen liegenden elastischen Materials und damit eine Verformung des Elastomers bewirkt.

Die erfindungsgemäße Vorrichtung weist den Vorteil auf, dass Ventile aus elektroaktivem Polymer sehr kompakt aufgebaut sind, wodurch die Abmessungen der Vorrichtung verkleinert werden. Ferner ermöglichen diese Ventile eine genaue Ansteuerung in einem großen thermischen Arbeitsbereich. Darüber hinaus weisen solche Ventile geringe Betätigungsgeräusche auf.

In einer besonders bevorzugten Ausführungsform umfasst die Steuereinrichtung der erfindungsgemäßen Sitzverstellung ein oder mehrere Steuergeräte, welche jeweils ein Gehäuse aufweisen, in dem ein oder mehrere Leiterplatten angeordnet sind.

Mittels der Leiterplatten werden die Steuerfunktionalitäten des Steuergeräts realisiert. In einer bevorzugten Variante ist dabei ein jeweiliges Ventil auf der bzw. einer der Leiterplatten angeordnet, wobei sich die Ventile ggf. auf mehrere Leiterplatten verteilen können. Vorzugsweise sind die Durchgangsöffnung oder die Durchgangsöffnungen des jeweiligen Ventils in der Leiterplatte ausgebildet, auf der sich das Ventil befindet. Auf diese Weise wird eine einfache Integration entsprechender Ventile in einem Steuergerät erreicht.

In einer weiteren Variante der erfindungsgemäßen Vorrichtung sind das oder die Betätigungselemente zumindest eines Ventils jeweils aus einer planen dielektrischen Elastomerfolie gebildet, welche auf einer Seite der Leiterplatte über der Durchgangsöffnung oder den Durchgangsöffnungen des Ventils angeordnet ist und zum Anlegen der elektrischen Spannung, vorzugsweise auf der Leiterplatte, elektrisch kontaktiert ist. Dabei wird durch Anlegen der elektrischen Spannung ein Abheben der planen dielektrischen Elastomerfolie von der Leiterplatte zum Freigeben der Durchgangsöffnung oder der Durchgangsöffnungen oder alternativ ein Absenken der planen dielektrischen Elastomerfolie zum Sperren der Durchgangsöffnung oder der Durchgangsöffnungen bewirkt. Hierdurch wird ein besonders kompakter Aufbau entsprechender Ventile in der Vorrichtung zur pneumatischen Sitzverstellung erreicht.

In einer Variante der soeben beschriebenen Ausführungsform ist ein Ventilsitz in zumindest einer Durchgangsöffnung des zumindest einen Ventils angeordnet. Dieser Ventilsitz steht auf der Seite der Leiterplatte, auf der die plane dielektrische Elastomerfolie angeordnet ist, aus der Durchgangsöffnung vor, so dass dort die plane dielektrische Elastomerfolie bei Sperrung der Durchgangsöffnung anliegt. Hierdurch wird eine zuverlässige Absperrfunktion des Ventils gewährleistet.

In einer weiteren bevorzugten Variante der erfindungsgemäßen Vorrichtung sind das oder die Betätigungselemente zumindest eines Ventils jeweils aus einer gewickelten dielektrischen Elastomerfolie gebildet, welche auf einer Seite der Leiterplatte angeordnet ist und welche zum Anlegen der elektrischen Spannung, vorzugsweise auf der Leiterplatte, elektrisch kontaktiert ist. Durch Anlegen der elektrischen Spannung wird ein Verformen der gewickelten dielektrischen Elastomerfolie zum Freigeben oder Sperren des oder der Durchgangsöffnungen bewirkt. Die Verwendung einer gewickelten dielektrischen Elastomerfolie ermöglicht eine sehr gute Ansteuerbarkeit der entsprechenden Ventile.

In einer bevorzugten Variante der soeben erläuterten Ausführungsform ist die gewickelte dielektrische Elastomerfolie ein Zylinder, der mit einer Stirnseite auf der Leiterplatte anliegt, wobei durch Anlegen der elektrischen Spannung eine Veränderung des Durchmessers des Zylinders zum Freigeben oder Sperren des oder der Durchgangsöffnungen bewirkt wird.

In einer weiteren bevorzugten Ausführungsform verbinden die Durchgangsöffnung oder die Durchgangsöffnungen (im geöffneten Zustand) Kanäle, die im Gehäuse zumindest eines Steuergeräts ausgebildet sind und den Transport von Druckluft hin zu und weg von zumindest einem Kissen ermöglichen. Hierdurch wird eine kompakte Ausgestaltung des Gehäuses und somit eine kompakte Bauform des Steuergeräts ermöglicht.

Die Erfindung betrifft darüber hinaus die Verwendung eines oder mehrerer Ventile umfassend jeweils ein oder mehrere Betätigungselemente aus elektroaktivem Polymer in einer Vorrichtung zur pneumatischen Verstellung eines Sitzes in einem Verkehrsmittel, insbesondere in einem Kraftfahrzeug. Die Ventile können basierend auf einer oder mehreren der oben beschriebenen bevorzugten Ausführungsformen ausgestaltet sein. Die Vorrichtung zur pneumatischen Sitzverstellung, in der diese Ventile verwendet werden, umfasst ein oder mehrere mit Luft befüllbare Kissen, welche über das oder die Ventile mit einer Druckluftzufuhr verbunden sind, sowie eine Steuereinrichtung zum Betätigen des oder der Ventile, um den Füllzustand des oder der Kissen zu ändern.

Ausführungsbeispiele der Erfindung werden nachfolgend anhand der beigefügten Figuren detailliert beschrieben.

Es zeigen:
- Fig. 1: eine Schnittansicht eines Ventils, das in einer Ausführungsform der erfindungsgemäßen Vorrichtung verbaut ist;
- Fig. 2: eine Schnittansicht eines abgewandelten Ventils in einer Ausführungsform der Erfindung; und
- Fig. 3: eine Schnittansicht einer weiteren Abwandlung eines Ventils in einer Ausführungsform der erfindungsgemäßen Vorrichtung.

Nachfolgend werden verschiedene Varianten von Ventilen aus elektroaktivem Polymer beschrieben, die in einer Vorrichtung zur Verstellung eines Kraftfahrzeugsitzes verbaut sind. Die Ventile dienen dabei dazu, die Zufuhr von Druckluft zu entsprechenden Kissen in einem Fahrzeugsitz zu ermöglichen bzw. die Abfuhr von Druckluft aus den Kissen zu gewährleisten. Auf diese Weise kann der Fahrzeugsitz an die Geometrie des darauf sitzenden Insassen angepasst werden.

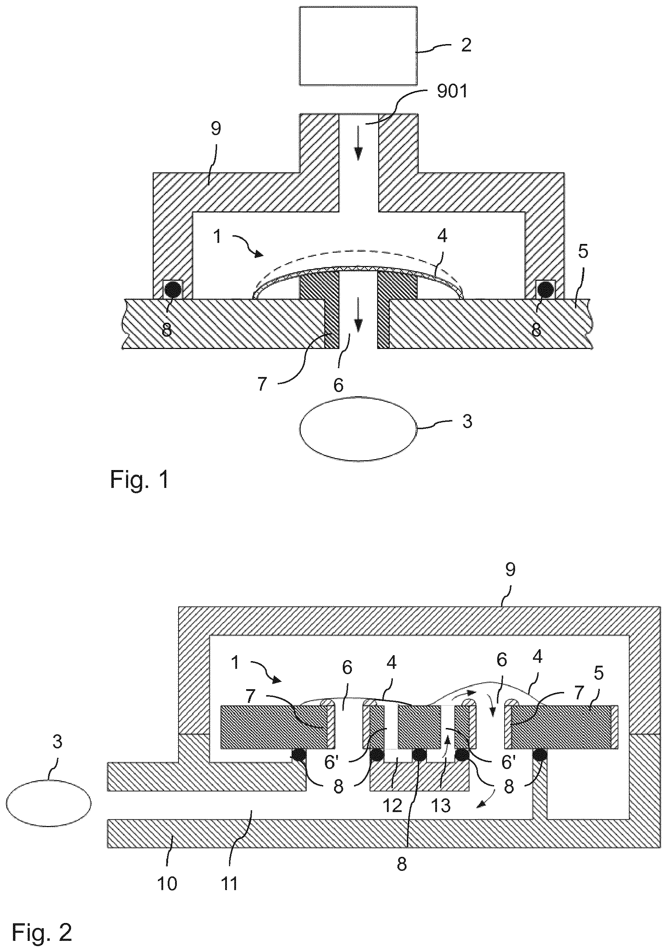

In Fig. 1 ist in Schnittansicht eine erste Ausführungsform eines in der erfindungsgemäßen Sitzverstellung verbauten Ventils gezeigt. Das Ventil ist mit Bezugszeichen 1 bezeichnet und befindet sich zwischen einer Druckluftzufuhr 2 und einem im Kraftfahrzeugsitz intergierten Kissen 3. Die Druckluftzufuhr 2, die vorzugsweise einen Kompressor bzw. Verdichter umfasst, sowie das Kissen 3 sind lediglich schematisch angedeutet. Die erfindungsgemäße Sitzverstellung umfasst in den hier beschriebenen Varianten mehrere Kissen sowie entsprechende Ventile, wobei in den nachfolgend erläuterten Figuren immer nur eines dieser Ventile mit entsprechend zugeordneten Luftkissen gezeigt ist.

Zur Steuerung der Betätigung der Ventile ist ein Steuergerät vorgesehen, welches über entsprechende Anschlüsse hin zur Druckluftzufuhr und hin zu den Kissen verfügt. Das Steuergerät ist z.B. in der Rückenlehne des Fahrzeugsitzes integriert. In den nachfolgenden Varianten sind die Ventile in dem Steuergerät verbaut. Die Vorrichtung zur Sitzverstellung kann gegebenenfalls auch mehr als ein Steuergerät beinhalten. Zum Beispiel kann ein Steuergerät zur Realisierung einer Massagefunktion im Kraftfahrzeugsitz vorgesehen sein, wohingegen ein anderes Steuergerät rein zur statischen Einstellung des Kraftfahrzeugsitzes dient.

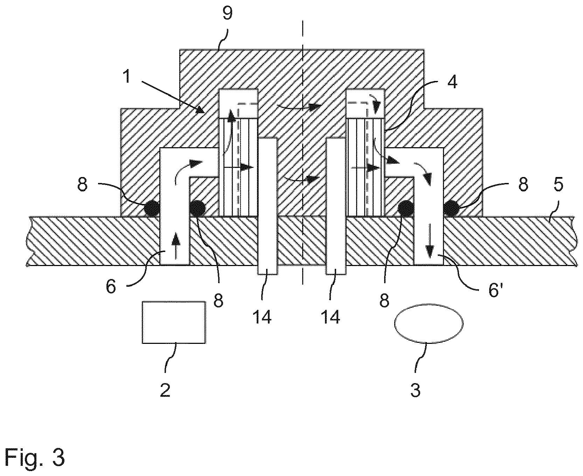

In der Ausführungsform der Fig. 1 ist das Ventil 1 auf einer Leiterplatte 5 angeordnet, die in dem Gehäuse des Steuergeräts vorgesehen ist und über welche die Steuerung der Betätigung der Ventile erfolgt. Aus Fig. 1 ist dabei eine Abdeckung 9 ersichtlich, die ein Teil des Gehäuses des Steuergeräts bildet. Das Gehäuse und die Leiterplatte sind in Fig. 1 und auch in den weiter unten beschriebenen Fig. 2 und 3 nur ausschnittsweise dargestellt. Das Gehäuseteil 9 liegt auf der Oberseite der Leiterplatte 5 auf und ist gegenüber dieser Oberseite über entsprechende Dichtungen 8 abgedichtet. Über einen Kanal 901 im Gehäuseteil 9 wird das Zuführen von Druckluft von der Druckluftzufuhr 2 ermöglicht. In dem zwischen Gehäuseteil 9 und Leiterplatte 5 gebildeten Hohlraum befindet sich das Ventil 1, das durch die Verwendung eines elektroaktiven Polymers sehr kompakt und leicht aufgebaut ist. Auf diese Weise wird der für das Ventil erforderliche Bauraum im Steuergerät reduziert.

Gemäß der Variante der Fig. 1 wird als elektroaktives Polymer eine dielektrische Elastomerfolie 4 verwendet, welche eine elastische dielektrische Schicht mit einer leitfähigen Oberseite und Unterseite umfasst. Diese Folie hat wie alle elektroaktiven Polymere die Eigenschaft, dass sie sich durch Anlegen einer Spannung verformt, wobei diese Verformung durch einen Abbau der Spannung wieder rückgängig gemacht wird. Mit anderen Worten wirkt das dielektrische Elastomer 4 als elastischer Kondensator. Beim Anlegen der Spannung zwischen der leitfähigen Ober- und Unterseite des Elastomers wird durch die elektrostatische Anziehungskraft die elastische Schicht im Elastomer zusammengedrückt. Wird die Spannung anschließend durch eine Entladung des Kondensators wieder abgeführt, wird der ursprüngliche Zustand des Elastomers wiederhergestellt.

In der Ausführungsform der Fig. 1 ist das dielektrische Elastomer 4 über einer Durchgangsöffnung 6 in der Leiterplatte 5 angeordnet. Die Durchgangsöffnung führt zu dem entsprechenden Kissen 3. Die leitenden Seiten des Elastomers kontaktieren entsprechende Kontakte auf der Leiterplatte, wodurch elektrische Spannung am Elastomer zu dessen Verformung angelegt werden kann. Die elektrische Kontaktierung ist aus Übersichtlichkeitsgründen nicht im Detail gezeigt. In der Durchgangsöffnung 6 ist ein Ventilsitz 7 mit einer zylindrischen Form angeordnet. Am oberen Ende des Ventilsitzes ist dabei ein Flansch ausgebildet, dessen Unterseite auf der Oberseite der Leiterplatte 5 aufliegt. Die Oberseite des Flansches dient zur Anlage der dielektrischen Elastomerfolie 4.

In Fig. 1 ist die Elastomerfolie in einem Zustand ohne angelegte Spannung gezeigt. In diesem Zustand liegt die Unterseite der Elastomerfolie auf dem Flansch auf. Dies entspricht dem gesperrten Zustand des Ventils, in dem eine Passage von Druckluft zwischen der Druckluftzufuhr 2 und dem Luftkissen 3 unterbrochen ist. Zum Öffnen des Ventils wird über die Kontaktierung auf der Leiterplatte eine elektrische Spannung an die Elastomerfolie angelegt. Wie bereits erwähnt, führt dies zu einem Zusammendrücken der elastischen Schicht, was wiederum zu einer lateralen Ausdehnung der Elastomerfolie und zu deren Anheben führt.

Die Position der Elastomerfolie bei angelegter Spannung ist in Fig. 1 durch eine gestrichelte Linien angedeutet. Wie man erkennt, hebt sich die Elastomerfolie bei angelegter Spannung von dem Ventilsitz 7 nach oben ab, wodurch die Durchgangsöffnung 6 geöffnet wird. Die Druckluft kann dann über ein seitliches Umströmen der Folie durch die Durchgangsöffnung fließen, was durch entsprechende Pfeile in Fig. 1 angedeutet ist. Durch das Anlegen der Spannung wird somit der geöffnete Zustand des Ventils eingenommen, bei dem das Zuführen von Druckluft von der Druckluftzufuhr 2 zum entsprechenden Kissen 3 ermöglicht wird. Zur Beibehaltung dieses Zustands muss die Spannung zur Elastomerfolie nicht dauerhaft angelegt bleiben, da die Elastomerfolie durch ihre Funktionsweise als Kondensator die Spannung speichert. Um ein Wiederverschließen des Ventils zu bewirken, wird die Spannung über eine Entladung des Kondensators wieder abgeführt, was zum Absenken der Elastomerfolie und zum Sperren der Durchgangsöffnung 6 führt.

Fig. 2 zeigt eine Modifikation des Ventils der Fig. 1. Dieses Ventil umfasst zwei dielektrische Elastomerfolien, wodurch die Funktion eines 3/3-Ventils erreicht wird. Die beiden Elastomerfolien 4 sind wiederum auf der Oberseite einer Leiterplatte 5 angeordnet und dort zum Anlegen einer Spannung geeignet kontaktiert. Die Elastomerfolien befinden sich in Analogie zu Fig. 1 oberhalb jeweiliger Durchgangsöffnungen 6, in denen der gleiche Ventilsitz 7 wie in Fig. 1 angeordnet ist. Im Unterschied zu Fig. 1 ist eine weitere Durchgangsöffnung 6' unterhalb jeder der Elastomerfolien 4 vorgesehen.

Die Leiterplatte 5 befindet sich wiederum in dem Gehäuse eines entsprechenden Steuergeräts zur Sitzverstellung. Das Gehäuse umfasst ein Oberteil 9 und ein Unterteil 10. Das Unterteil liegt über entsprechende Dichtungen 8 an der Unterseite der Leiterplatte 5 an. In diesem Unterteil sind Kanäle ausgebildet, um Druckluft hin zu bzw. weg von dem Luftkissen 3 zu führen, das über den linken Ausgang des Gehäuseunterteils 10 mit dem Steuergerät verbunden ist. In dem Gehäuseunterteil 10 sind neben einem horizontal verlaufenden Kanal 11 ein Abluftkanal 12 und ein Zuluftkanal 13 ausgebildet. Der Abluftkanal führt zu einer (nicht gezeigten) Entlüftungsöffnung, über welche Druckluft zum Entlüften des Kissens abgeführt. Der Zuluftkanal 13 führt zu der entsprechenden Druckluftzufuhr 2, die in Fig. 2 aus Übersichtlichkeitsgründen nicht gezeigt ist.

In dem Szenario der Fig. 2 ist an die linke dielektrische Elastomerfolie 4 keine Spannung angelegt. Demzufolge wird eine Verbindung des Abluftkanals 12 über die Durchgangsöffnungen 6 und 6' mit dem Kanal 11 gesperrt, so dass keine Druckluft über die entsprechende Entlüftungsöffnung austreten kann. Im Unterschied hierzu ist an die rechte Elastomerfolie 4 eine Spannung angelegt, so dass sich diese von dem darunter liegenden Ventilsitz 7 abhebt. Hierdurch wird eine Passage von Druckluft von dem Zuluftkanal 13 über die Durchgangsöffnungen 6' und 6 zum Kanal 11 erreicht, wie durch entsprechende Pfeile angedeutet ist. Demzufolge wird eine Befüllung des Kissens 3 über die Druckluftzufuhr 2 ermöglicht.

Mit der geschlossenen linken Elastomerfolie und der geöffneten rechten Elastomerfolie wird somit ein erster Schaltzustand des 3/3-Ventils eingenommen, in dem die Befüllung des Kissens bewirkt wird. Demgegenüber wird dann, wenn an keiner der beiden Elastomerfolien eine Spannung angelegt wird, ein zweiter Schaltzustand des 3/3-Ventils eingenommen, in dem das Ventil gesperrt ist. In einem dritten Schaltzustand des Ventils wird nur an die linke Elastomerfolie eine Spannung angelegt, wohingegen die rechte Elastomerfolie spannungslos ist. Als Konsequenz wird ein Zuführen von Druckluft von der Druckluftzufuhr 2 zu dem Kissen 3 gesperrt, wohingegen der Durchgang von Druckluft vom Kissen 3 über die Leitung 11 via den Durchgangsöffnungen 6 und 6' hin zum Abluftkanal 12 und dem entsprechenden Entlüftungsventil ermöglicht wird, so dass ein Entlüften des Kissens erreicht wird.

Fig. 3 zeigt eine dritte Variante eines Ventils in einer Vorrichtung zur Verstellung eines Kraftfahrzeugsitzes. Im Unterschied zu den vorangegangenen Varianten wird anstatt einer planen Elastomerfolie eine gewickelte Elastomerfolie 4 verwendet. Die Folie ist dabei zu einem Zylinder gewickelt. Im dargestellten Querschnitt des Zylinders befindet sich zwischen aufeinander folgenden elastischen Schichten immer eine leitende Oberfläche, wobei die Polarität der leitenden Oberfläche von einer Schicht zur nächsten wechselt. Dies wird durch die Wicklung von zwei leitenden Schichten unterschiedlicher Polarität mit dazwischen liegendem elastischem Material erreicht.

In Analogie zu den vorangegangenen Ausführungsformen ist das Ventil 1 der Fig. 3 auf einer Leiterplatte 5 angeordnet, auf dessen Oberseite sich ein Gehäuseteil 9 befindet, das gegenüber der Leiterplatte durch entsprechende Dichtungen 8 abgedichtet ist. Ferner sind in der Leiterplatte 5 wiederum zwei Durchgangsöffnungen 6 und 6' ausgebildet. Über die Durchgangsöffnung 6 wird Druckluft von der Druckluftzufuhr 2 zugeführt und über die Durchgangsöffnung 6' gelangt Druckluft zu einem entsprechenden Luftkissen 3. In Fig. 3 sind ferner die elektrischen Kontaktierungen 14 zum Anlegen der Spannung an die gewickelte Elastomerfolie gezeigt. Die Kontaktierungen erstrecken sich durch entsprechende Öffnungen in der Leiterplatte 5 und sind z.B. mit Kontakten an der Unterseite der Leiterplatte verbunden.

In der Darstellung der Fig. 3 ist keine Spannung an die gewickelte Elastomerfolie 4 angelegt. Hierdurch werden entsprechende Kanäle hin zur Durchgangsöffnung 6 und zur Durchgangsöffnung 6' geschlossen, so dass das Ventil einen Durchgang von Druckluft sperrt. Durch Anlegen von elektrischer Spannung an die gewickelte Elastomerfolie wird diese zusammengedrückt, so dass sie ihren Durchmesser verkleinert und ihre Höhe vergrößert. Dies ist durch gestrichelte Linien in Fig. 3 angedeutet. Wie man erkennt, wird in diesem Zustand ein Durchgang von Druckluft über die Durchgangsöffnungen 6 und 6' und entsprechende Kanäle in dem Gehäuse 9 ermöglicht. Insbesondere kann die Druckluft aufgrund des verringerten Durchmessers um die gewickelte Elastomerfolie an ihrer Außenseite und ihrer Oberseite herum strömen, so dass Druckluft durch das Innere des Gehäuseteils 9 von der Durchgangsöffnung 6 zu der Durchgangsöffnung 6' fließen kann. Dies wird durch entsprechende Pfeile in Fig. 3 angedeutet. Es wird somit durch Anlegen der Spannung an die gewickelte Elastomerfolie ein Öffnen des Ventils und somit das Zuführen von Druckluft von der Druckluftzufuhr 2 zu dem Kissen 3 ermöglicht.

Die im Vorangegangenen beschriebenen Ausführungsformen der Erfindung weisen eine Reihe von Vorteilen auf. Insbesondere können durch die Verwendung von elektroaktivem Polymer kompakte und leichte Ventile realisiert werden, die vorzugsweise im Gehäuse eines Steuergeräts der Vorrichtung zur Sitzverstellung integriert sind, wodurch das Steuergerät verkleinert werden kann. Gleichzeitig wird durch die Verwendung solcher Ventile das Betätigungsgeräusch deutlich reduziert und es kann eine proportionale Ansteuerung der Ventile in einem großen thermischen Arbeitsbereich realisiert werden. Ferner kann die Schaltstellung der Ventile nach Anlegen einer Spannung auch ohne weitere Spannungszufuhr aufrechterhalten bleiben, bis die Spannung über eine entsprechende Entladung abgeführt wird. Auf diese Weise kann ein bistabiles Steuerelement realisiert werden.

### Bezugszeichenliste

- 1: Ventil
- 2: Druckluftzufuhr
- 3: Kissen
- 4: Betätigungselement
- 5: Leiterplatte
- 6, 6': Durchgangsöffnung
- 7: Ventilsitz
- 8: Dichtung
- 9: Gehäuseteil
- 901: Öffnung im Gehäuseteil
- 10: Gehäuseteil
- 11, 12, 13: Kanäle
- 14: elektrische Kontaktierung

## Patentansprüche

1. Vorrichtung zur pneumatischen Verstellung eines Sitzes in einem Verkehrsmittel, insbesondere in einem Kraftfahrzeug, umfassend ein oder mehrere mit Luft befüllbare Kissen (3), welche über ein oder mehrere Ventile (1) mit einer Druckluftzufuhr (2) verbunden sind, sowie eine Steuereinrichtung zum Betätigen des oder der Ventile (1), um den Füllzustand des oder der Kissen (1) zu ändern,
**dadurch gekennzeichnet, dass**
ein jeweiliges Ventil (1) zumindest eines Teils der Ventile (1) ein oder mehrere Betätigungselemente (4) aus elektroaktivem Polymer umfasst, an welche eine elektrische Spannung angelegt werden kann, wobei durch Anlegen der elektrischen Spannung ein jeweiliges Betätigungselement (4) verformt wird und hierdurch eine oder mehrere Durchgangsöffnungen (6, 6'), über welche ein Austausch von Druckluft mit zumindest einem Kissen (3) erfolgt, freigegeben oder gesperrt werden.

2. Vorrichtung nach Anspruch 1, **dadurch gekennzeichnet, dass** das oder die Betätigungselemente (4) eines jeweiligen Ventils (1) aus einem elektroaktiven Elastomer, vorzugsweise in der Form einer Folie, gebildet sind.

3. Vorrichtung nach Anspruch 1 oder 2, **dadurch gekennzeichnet, dass** die Steuereinrichtung ein oder mehrere Steuergeräte umfasst, welche jeweils ein Gehäuse (9, 10) aufweisen, in dem ein oder mehrere Leiterplatten (5) angeordnet sind.

4. Vorrichtung nach Anspruch 3, **dadurch gekennzeichnet, dass** ein jeweiliges Ventil (1) auf einer Leiterplatte (5) angeordnet ist.

5. Vorrichtung nach Anspruch 4, **dadurch gekennzeichnet, dass** die Durchgangsöffnung oder die Durchgangsöffnungen (6, 6') des jeweiligen Ventils (1) in der Leiterplatte (5) ausgebildet sind.

6. Vorrichtung nach Anspruch 5, **dadurch gekennzeichnet, dass** das oder die Betätigungselemente (4) zumindest eines Ventils (1) jeweils aus einer planen dielektrischen Elastomerfolie gebildet sind, welche auf einer Seite der Leiterplatte (5) über der Durchgangsöffnung oder den Durchgangsöffnungen (6, 6') des Ventils (1) angeordnet ist und zum Anlegen der elektrischen Spannung elektrisch kontaktiert ist, wobei durch Anlegen der elektrischen Spannung ein Abheben der planen dielektrischen Elastomerfolie von der Leiterplatte (5) zum Freigeben der Durchgangsöffnung oder der Durchgangsöffnungen (6, 6') oder ein Absenken der planen dielektrischen Elastomerfolie zum Sperren der Durchgangsöffnung oder der Durchgangsöffnungen (6, 6') bewirkt wird.

7. Vorrichtung nach Anspruch 6, **dadurch gekennzeichnet, dass** ein Ventilsitz (7) in zumindest einer Durchgangsöffnung (6, 6') des zumindest einen Ventils (1) angeordnet ist und auf der Seite der Leiterplatte, auf der die plane dielektrische Elastomerfolie angeordnet ist, aus der Durchgangsöffnung (6, 6') vorsteht, so dass dort die plane dielektrische Elastomerfolie bei Sperrung der Durchgangsöffnung (6, 6') anliegt.

8. Vorrichtung nach einem der Ansprüche 5 bis 7, **dadurch gekennzeichnet, dass** das oder die Betätigungselemente (4) zumindest eines Ventils (1) jeweils aus einer gewickelten dielektrischen Elastomerfolie gebildet sind, welche auf einer Seite der Leiterplatte (5) angeordnet ist und auf der Leiterplatte (5) zum Anlegen der elektrischen Spannung elektrisch kontaktiert ist, wobei durch Anlegen der elektrischen Spannung ein Verformen der gewickelten dielektrische Elastomerfolie zum Freigeben oder Sperren des oder der Durchgangsöffnungen (6, 6') bewirkt wird.

9. Vorrichtung nach Anspruch 8, **dadurch gekennzeichnet, dass** die gewickelte dielektrische Elastomerfolie ein Zylinder ist, der mit einer Stirnseite an der Leiterplatte (5) anliegt, wobei durch Anlegen der elektrischen Spannung eine Veränderung des Durchmessers des Zylinders zum Freigeben oder Sperren des oder der Durchgangsöffnungen (6, 6') bewirkt wird.

10. Vorrichtung nach einem der vorhergehenden Ansprüche in Kombination mit Anspruch 5, **dadurch gekennzeichnet, dass** die Durchgangsöffnung oder die Durchgangsöffnungen (6, 6') Kanäle (11, 12, 13) verbinden, welche im Gehäuse (9, 10) zumindest eines Steuergeräts ausgebildet sind und den Transport von Druckluft hin zu und weg von zumindest einem Kissen (3) ermöglichen.

## Claims

1. Device for the pneumatic adjustment of a seat in a means of transport, in particular in a motor vehicle, comprising one or more cushions (3) which can be filled with air and which are connected via one or more valves (1) to a compressed-air supply (2), and a control device for the actuation of the one or more valves (1) for the purposes of changing the filling state of the one or more cushions (3),
**characterized in that**
a respective valve (1) of at least some of the valves (1) comprises one or more actuation elements (4) composed of electroactive polymer, to which an electrical voltage can be applied, wherein, by application of the electrical voltage, a respective actuation element (4) is deformed, and in this way, one or more passage openings (6, 6') via which an exchange of compressed air with at least one cushion (3) takes place is or are opened up or shut off.

2. Device according to Claim 1, **characterized in that** the one or more actuation elements (4) of a respective valve (1) is or are formed from an electroactive elastomer, preferably in the form of a foil.

3. Device according to Claim 1 or 2, **characterized in that** the control device comprises one or more control units which each have a housing (9, 10) in which one or more circuit boards (5) is or are arranged.

4. Device according to Claim 3, **characterized in that** a respective valve (1) is arranged on a circuit board (5).

5. Device according to Claim 4, **characterized in that** the passage opening or the passage openings (6, 6') of the respective valve (1) is or are formed in the circuit board (5).

6. Device according to Claim 5, **characterized in that** the one or more actuation elements (4) of at least one valve (1) is or are each formed from a flat dielectric elastomer foil which is arranged on one side of the circuit board (5) over the passage opening or the passage openings (6, 6') of the valve (1) and which is electrically contacted for the application of the electrical voltage, wherein application of the electrical voltage causes a lift-off of the flat dielectric elastomer foil from the circuit board (5) for the purposes of opening up the passage opening or the passage openings (6, 6') or causes a lowering of the flat dielectric elastomer foil for the purposes of shutting off the passage opening or the passage openings (6, 6').

7. Device according to Claim 6, **characterized in that** a valve seat (7) is arranged in at least one passage opening (6, 6') of the at least one valve (1) and protrudes out of the passage opening (6, 6') on that side of the circuit board on which the flat dielectric elastomer foil is arranged, such that the flat dielectric elastomer foil makes abutting contact there when shutting off the passage opening (6, 6').

8. Device according to one of Claims 5 to 7, **characterized in that** the one or more actuation elements (4) of at least one valve (1) is or are each formed from a wound dielectric elastomer foil which is arranged on one side of the circuit board (5) and which is electrically contacted on the circuit board (5) for the application of the electrical voltage, wherein application of the electrical voltage causes a deformation of the wound dielectric elastomer foil for the purposes of opening up or shutting off the one or more passage openings (6, 6').

9. Device according to Claim 8, **characterized in that** the wound dielectric elastomer foil is a cylinder which bears with one face side against the circuit board (5), wherein application of the electrical voltage causes a change in the diameter of the cylinder for the purposes of opening up or shutting off the one or more passage openings (6, 6').

10. Device according to one of the preceding claims in combination with Claim 5, **characterized in that** the passage opening or the passage openings (6, 6') connect(s) ducts (11, 12, 13) which are formed in the housing (9, 10) of at least one control unit and which permit the transport of compressed air to and away from at least one cushion (3).

## Revendications

1. Dispositif de réglage pneumatique d'un siège dans un moyen de transport, notamment dans un véhicule automobile, comprenant un ou plusieurs coussins (3) remplissables avec de l'air, lesquels sont reliés par une ou plusieurs soupapes (1) avec une alimentation d'air comprimé (2), ainsi qu'un dispositif de commande pour actionner la ou les soupapes (1) pour modifier le niveau de remplissage du ou des coussins (1),
**caractérisé en ce**
**qu'** une soupape correspondante (1), au moins une partie des soupapes (1), comprend un ou plusieurs éléments d'actionnement (4) en polymère électro-actif, auxquels peut être appliquée une tension électrique, un élément d'actionnement (4) correspondant étant déformé par application de la tension électrique et une ou plusieurs ouvertures de passage (6, 6'), par lesquelles un échange d'air comprimé a lieu avec au moins un coussin (3), étant par ce moyen libérées ou bloquées.

2. Dispositif selon la revendication 1, **caractérisé en ce que** le ou les éléments (4) d'une soupape correspondante (1) sont formés d'un élastomère électro-actif, de préférence sous la forme d'une feuille.

3. Dispositif selon la revendication 1 ou 2, **caractérisé en ce que** le dispositif de commande comprend un ou plusieurs appareils de commande, lesquels comportent un boîtier (9, 10) dans lequel sont disposés une ou plusieurs plaquettes de circuits imprimés (5).

4. Dispositif selon la revendication 3, **caractérisé en ce qu'** une soupape correspondante (1) est disposée sur une plaquette de circuits imprimés (5).

5. Dispositif selon la revendication 4, **caractérisé en ce que** l'ouverture de passage ou les ouvertures de passage (6, 6') de la soupape correspondante (1) sont constituées dans la plaquette de circuits imprimés (5).

6. Dispositif selon la revendication 5, **caractérisé en ce que** le ou les éléments d'actionnement (4) d'au moins une soupape (1) sont respectivement formés d'une feuille d'élastomère diélectrique plane, laquelle est disposée sur une face de la plaquette de circuits imprimés (5) sur l'ouverture de passage ou les ouvertures de passage (6, 6') de la soupape (1) et est mise électriquement en contact par application de la tension électrique, l'application de la tension électrique causant une séparation de la feuille d'élastomère diélectrique plane de la plaquette de circuits imprimés (5) pour libérer l'ouverture de passage ou les ouvertures de passages (6, 6') ou un abaissement de la feuille d'élastomère diélectrique plane pour bloquer l'ouverture de passage ou les ouverture de passage (6, 6').

7. Dispositif selon la revendication 6, **caractérisé en ce qu'**un siège de soupape (7) est disposé dans au moins une ouverture de passage (6, 6') d'au moins une soupape (1) et dépasse de l'ouverture de passage (6, 6') sur la face de la plaquette de circuits imprimés sur laquelle la feuille d'élastomère diélectrique plane est disposée, de telle sorte que la feuille d'élastomère diélectrique plane vient s'y appliquer lors du blocage de l'ouverture de passage (6, 6').

8. Dispositif selon l'une quelconque des revendications 5 à 7, **caractérisé en ce que** le ou les éléments d'actionnement (4) d'au moins une soupape (1) sont respectivement formés d'une feuille d'élastomère diélectrique enroulée, laquelle est disposée sur une face de la plaquette de circuits imprimés (5) et est mise électriquement en contact sur la plaquette de circuits imprimés (5) pour appliquer la tension électrique, une déformation de la feuille d'élastomère diélectrique enroulée étant causée par application de la tension électrique pour libérer ou bloquer la ou les ouvertures de passage (6, 6').

9. Dispositif selon la revendication 8, **caractérisé en ce que** la feuille d'élastomère diélectrique enroulée est un cylindre, qui vient s'appliquer avec une face avant à la plaquette de circuits imprimés (5), une modification du diamètre du cylindre étant causée pour libérer ou bloquer la ou les ouvertures de passage (6, 6') par application de la tension électrique.

10. Dispositif selon l'une quelconque des revendications précédentes en combinaison avec la revendication 5, **caractérisé en ce que** l'ouverture de passage ou les ouvertures de passage (6, 6') relient des conduits (11, 12, 13), lesquels sont constitués dans le boîtier (9, 10) d'au moins un appareil de commande et permettent le transport d'air comprimé vers au moins un coussin (3) et depuis ce dernier.
